# EUROPÄISCHE PATENTSCHRIFT

(11) **EP 3 901 490 B1**
(45) Veröffentlichungstag und Bekanntmachung des Hinweises auf die Patenterteilung: **01.03.2023**
(21) Anmeldenummer: 20170275.0
(22) Anmeldetag: 20.04.2020
(51) Int. Cl.: F16H 25/22, F16H 25/20, F16H 57/02

(54) **LINEARANTRIEB**
LINEAR DRIVE
ENTRAÎNEMENT LINÉAIRE

(43) Veröffentlichungstag der Anmeldung: 27.10.2021
(73) Patentinhaber: elero GmbH, 07381 Pössneck (DE)
(72) Erfinder: ROSSBACH, Christian, 07907 Schleiz (DE)
(74) Vertreter: Ruckh, Rainer Gerhard

(56) Entgegenhaltungen:
- CN-U- 203 703 032
- DE-A1-102015 219 198
- JP-A- 2013 061 070
- JP-B2- 5 853 616
- US-A- 6 073 505
- US-A1- 2009 261 671
- US-A1- 2022 136 592

## Beschreibung

Die Erfindung betrifft einen Linearantrieb.

Derartige Linearantriebe umfassen generell einen elektrischen Antrieb und einen Gewindetrieb. Eine mit dem elektrischen Antrieb erzeugte Drehbewegung wird in eine Linearbewegung einer Schubstange umgesetzt. Die Linearbewegung der Schubstange wird für Stellbewegungen von Werkzeugen oder Betätigungsmitteln genutzt, die definierte Arbeitsvorgänge durchführen können. Auch kann die Linearbewegung zur Positionierung von Objekten genutzt werden. Beispiele hierfür sind die Positionierungen von Verschlussklappen oder ähnlichen Verschlussmitteln.

Generell besteht eine Anforderung an einen Linearantrieb darin, dass die Drehbewegung des elektrischen Antriebs in eine reine Linear-, das heißt Translationsbewegung der Schubstange umgesetzt wird.

Bekannte Mechanismen hierfür weisen einen relativ hohen konstruktiven Aufwand auf.

Die JP 5853616 B2 betrifft einen Linearantrieb mit einem Gewindetrieb, der mittels eines elektrischen Antriebs angetrieben wird. Eine durch den elektrischen Antrieb bewirkte Drehbewegung des Gewindetriebs wird in eine Linearbewegung einer Schubstange umgesetzt. Hierzu ist eine auf dem Gewindetrieb gelagerte Mutter mit Kopplungselementen an die Schubstange angekoppelt. Die Schubstange ist in einem Führungsrohr verschiebbar gelagert.

Die US 2009/0261671 A1 betrifft einen Linearantrieb mit einer von einem Elektrorohr angetriebenen Gewindespindel. Auf der Gewindespindel ist eine Mutter gelagert. Durch Kopplungsmittel wird eine Drehbewegung der Gewindespindel in eine Linearbewegung einer Schubstange umgesetzt.

Die JP 2013 061070 A betrifft einen Gewindetrieb mit einer von einem Elektromotor angetriebenen Gewindespindel. Auf der Gewindespindel ist eine Mutter gelagert, die in einer Schubstange geführt ist. Die Drehbewegung der Gewindespindel wird in eine Linearbewegung der Schubstange dadurch umgesetzt, dass Führungsteile in eine Nut der Mutter eingeführt und dort fixiert werden.

Die US 6 073 505 A betrifft einen Linearantrieb mit einer Gewindespindel, die mittels eines elektrischen Antriebs in eine Drehbewegung versetzt wird. Auf der Drehspindel ist eine Mutter gelagert. An der Mutter sind Führungsmittel gelagert, die für eine Umsetzung der Drehbewegung der Gewindespindel in eine Linearbewegung einer Schubstange, in der die Mutter geführt ist, sorgen.

Die CN 203 703 032 U betrifft eine Antriebseinheit mit einer Gewindespindel. Auf der Gewindespindel ist eine Mutter mit einer Verdrehsicherung gelagert.

Der Erfindung liegt die Aufgabe zugrunde einen Linearantrieb der eingangs genannten Art bereitzustellen, welcher bei geringem konstruktiven Aufwand eine hohe Funktionalität aufweist.

Zur Lösung dieser Aufgabe sind die Merkmale des Anspruchs 1 vorgesehen. Vorteilhafte Ausführungsformen und zweckmäßige Weiterbildungen der Erfindung sind in den abhängigen Ansprüchen beschrieben.

Die Erfindung betrifft einen Linearantrieb mit einem elektrischen Antrieb und einem Gewindetrieb wobei eine Drehbewegung des elektrischen Antriebs in eine Linearbewegung einer Schubstange umgesetzt ist. Der Gewindetrieb weist eine Mutter auf, welche über ein Kopplungsmittel mit der Schubstange verbunden ist, und dass mittels des Kopplungsmittels die Schubstange in einem Führungsrohr verdrehsicher gelagert ist. Die Innenwand des Führungsrohrs weist einen polygonalen Querschnitt und das Kopplungmittel weist eine an diese angepasste Außenfläche auf.

Gemäß einer vorteilhaften Ausführungsform treibt der elektrische Antrieb eine Gewindespindel an und versetzt diese in eine Drehbewegung, die mittels des Gewindetriebs in eine Linearbewegung der Schubstange umgesetzt ist.

Durch die mit dem Kopplungsmittel bewirkte Verdrehsicherung führt die Schubstange eine reine Linearbewegung aus.

Vorteilhaft ist der Gewindetrieb als Kugelgewindetrieb ausgebildet.

Ein wesentlicher Vorteil der Erfindung besteht darin, dass mit äußerst geringem Aufwand eine Verdrehsicherung der Schubstange des Linearantriebs bewerkstelligt wird, so dass eine rotative Bewegung des elektrischen Antriebs in eine reine Linearbewegung der Schubstange umgesetzt wird.

Mit der Schubstange des Linearantriebs können somit reproduzierbare und genaue Stellbewegungen durchgeführt werden. Am freien Ende der Schubstange kann dabei ein Werkzeug oder Betätigungsmittel angeordnet sein um durch die Stellbewegung der Schubstange definierte Arbeitsvorgänge durchzuführen.

Ein bevorzugtes Anwendungsgebiet des Linearantriebs ist im Bereich von Flaschenabfüllanlagen. Typische Anwendungsfälle sind hierbei Ventilverstellungen. Dies kann mit dem erfindungsgemäßen Linearantrieb schnell, reproduzierbar und zuverlässig erledigt werden.

Ein wesentlicher Aspekt der Erfindung besteht darin, dass das Kopplungsmittel, das zur Verbindung der Schubstange mit der Mutter des Gewindetriebs dient gleichzeitig eine Verdrehsicherung für die Schubstange bildet, so dass eine geringe Anzahl von Einzelteilen aufweist und dementsprechend kostengünstig und rationell herstellbar ist.

Vorteilhaft bildet die Außenseite des Kopplungsmittels eine Gleitfläche aus, welche bei einer Axialverschiebung der Mutter und der Schubstange entlang der Innenseite des Führungsrohrs gleitet.

Das Kopplungsmittel ist an der Innenwand des Führungsrohrs verdrehsicher gelagert und gleitet entlang dieser Innenwand, wenn durch den elektrischen Antrieb die Mutter des Gewindetriebs mit der Schubstange verschoben wird.

Besonders vorteilhaft besteht das Kopplungsmittel aus einem abriebfesten Material.

Geeignete Materialien hierfür sind abriebfeste Kunststoffe, Keramiken und dergleichen. Durch diese abriebfeste Ausbildung des Kopplungsmittels ist eine verschlussfreie Führung entlang der Führungsrohre gewährleistet.

Erfindungsgemäß wird die verdrehsichere Lagerung und Führung der Kopplungsmittel im Führungsrohr dadurch erreicht, dass die Innenwand des Führungsrohrs einen polygonalen Querschnitt aufweist. Das Kopplungsmittel weist eine an diese angepasste Außenfläche auf.

Insbesondere weist die Innenwand des Führungsrohrs einen Sechskant-Querschnitt auf.

Zweckmäßig erstreckt sich das Kopplungsmittel nur über einen Teilwinkelbereich des Umfangs der Mutter, wobei die Mutter eine kreiszylindrische Außenfläche aufweist.

Das Kopplungsmittel kann so eine kleine Baugröße aufweisen. Insbesondere ist auch die Ausdehnung des Kopplungsmittels in Längsrichtung der Mutter signifikant kleiner als die Länge der Mutter. Das so ausgebildete Kopplungsmittel kann kostengünstig hergestellt werden und erfordert nur einen geringen Einbauraum, so dass sich die Baugröße des Linearantriebs durch das Kopplungsmittel nicht vergrößert.

Auch die Montage des so ausgebildeten Kopplungsmittels kann einfach und schnell durchgeführt werden. Besonders vorteilhaft ist das Kopplungsmittel auf die Mutter aufsteckbar.

Gemäß einer konstruktiv vorteilhaften Ausgestaltung erstreckt sich das Kopplungsmittel über einen Teilwinkelbereich in der Größenanordnung von 180° des Umfangs der Mutter.

Das sich über diesen Teilwinkelbereich erstreckende Kopplungsmittel ist einerseits sicher an der Außenfläche der Mutter gehalten. Andererseits kann damit das Kopplungsmittel einfach auf die Mutter aufgesteckt werden, wobei sich je nach Materialbeschaffenheit und Wandstärke des Kopplungsmittels dieses beim Aufstecken elastisch verformen kann.

Gemäß einer zweckmäßigen Ausgestaltung sind das Kopplungsmittel, die Mutter und die Schubstange durch ein Fixiermittel verbunden.

Besonders vorteilhaft hierbei ist, dass mit nur einem Fixiermittel sowohl das Kopplungsmittel mit der Mutter als auch die Mutter mit der Schubstange verbunden werden kann, was eine besonders effiziente und rationelle Fixierung dieser Teile ermöglicht. Insbesondere ist vorteilhaft, dass das Fixiermittel aus nur einem Teil bestehen kann, wodurch mit einer geringen Anzahl von Bauteilen alle vorgenannten Teile in ihren Sollpositionen und relativ zueinander fixiert werden können. Besonders vorteilhaft ist das Fixiermittel von einer Passfeder gebildet.

Das so ausgebildete Fixiermittel ist kostengünstig herstellbar. Die Fixierung mit der Passfeder erfolgt bevorzugt derart, dass das Kopplungsmittel, die Mutter und die Schubstange jeweils eine Bohrung aufweisen. Zur Fixierung dieser Teile ist die Passfeder in diese Bohrung einführbar.

Durch Ausbildung nur einer Steck- bzw. Rastverbindung werden somit in nur einem Arbeitsgang das Kopplungsmittel, die Mutter und die Schubstange aneinander gekoppelt, wobei durch die Bohrungen die Relativlagen dieser Teile exakt vorgegeben sind.

Generell kann das Fixiermittel ein separates Teil sein. Alternativ kann das Fixiermittel am Kopplungsmittel angeformt sein.

Die Erfindung wird im Folgenden anhand der Zeichnungen erläutert. Es zeigen:
- Figur 1: Ausführungsbeispiel des erfindungsgemäßen Linearantriebs
- Figur 2: Schnittdarstellung des Linearantriebs gemäß Figur 1
- Figur 3 - 6: Unterschiedliche Montagestadien beim Zusammenbau des Linearantriebs gemäß den Figuren 1 und 2.

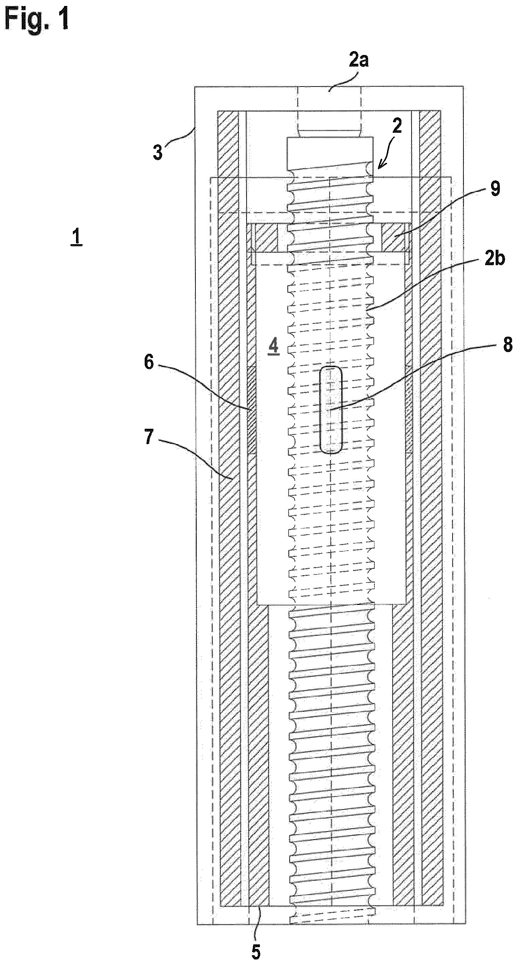

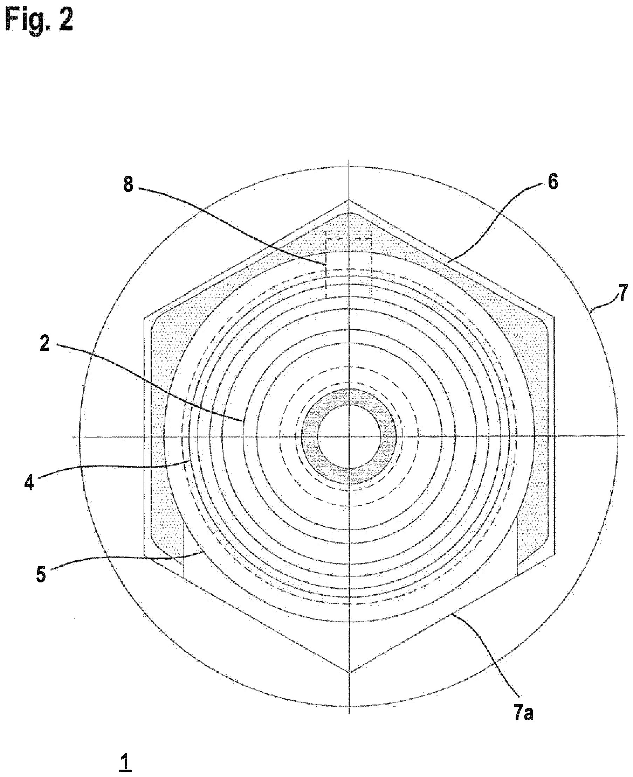

Die Figuren 1 und 2 zeigen ein Ausführungsbeispiel des erfindungsgemäßen Linearantriebs 1. Der Linearantrieb 1 weist eine Gewindespindel 2 auf, die mittels eines nicht dargestellten elektrischen Antriebs, das heißt eines Elektromotors angetrieben wird. Die Gewindespindel 2 weist zum Anschluss der Gewindespindel 2 einen Anschlussflansch 2a auf, der aus einem eine Schutzhülle bildenden Gehäuse 3 des Linearantriebs 1 herausgeführt ist.

Der Linearantrieb 1 weist weiterhin einen Gewindetrieb in Form eines Kugelgewindetriebs auf. Der Kugelgewindetrieb weist eine Mutter 4 mit einer kreiszylindrischen Außenfläche auf. Zwischen der Mutter 4 und der Gewindespindel 2 sind nicht dargestellte Kugeln als weitere Bestandteile des Kugelgewindetriebs vorgesehen. Die Kugeln laufen in Rillen 2b der Gewindespindel 2.

Die Mutter 4 ist fest mit einer rohrförmigen Schubstange 5 verbunden, in welcher die Gewindespindel 2 geführt ist.

Zur Fixierung der Mutter 4 an der Schubstange 5 dient ein Kopplungsmittel 6, das zugleich eine Verdrehsicherung für die Schubstange 5 und damit auch für die Mutter 4 bildet. Durch diese Ankopplung mit dem Kopplungsmittel 6 wird eine Drehbewegung des elektrischen Antriebs und der Gewindespindel 2 über den Kugelgewindetrieb eine reine Linearbewegung der Schubstange 5 generiert. Am freien vorderen Ende der Schubstange 5 kann ein nicht dargestelltes Werkzeug oder Betätigungsmittel vorgesehen sein, mittels dessen durch die lineare Stellbewegung der Schubstange 5 Arbeitsprozesse durchführbar sind.

Das Kopplungsmittel 6 besteht aus einem abriebfesten Material. Die Außenfläche des Kopplungsmittels 6 bildet eine Gleitfläche aus, die entlang der Innenwand 7a eines Führungsrohrs 7 gleiten kann. Das Führungsrohr 7 umgibt die Schubstange 5 und ist an der Innenseite des Gehäuses 3 gelagert.

Wie Figur 2 zeigt, weist die Innenseite des Führungsrohrs 7 einen über eine Länge konstanten polygonalen Querschnitt auf. Im vorliegenden Fall weist die Innenwand 7a des Führungsrohrs 7 die Form eines Sechskants auf.

Wie Figur 2 weiter zeigt, weist die Mutter 4 eine an die Kanten der Innenwand 7a des Führungsrohrs 7 angepasste Außenfläche auf, die mit konstantem, geringen Spiel der Innenwand 7a des Führungsrohrs 7 gegenüber liegt, so dass die das Kopplungsmittel 6 mit einer Außenfläche entlang der Innenwand 7a des Führungsrohrs 7 gleiten kann.

Wie aus Figur 2 ersichtlich, erstreckt sich das Kopplungsmittel 6 nicht über den gesamten Umfang der Mutter 4, sondern nur über einen Teilwinkelbereich, der sich über etwas mehr als 180° erstreckt. Die Innenfläche des Kopplungsmittels 6 ist dabei an die zylindrische Außenfläche der Mutter 4 angepasst. Das Kopplungsmittel 6 kann auf die Mutter 4 aufgesteckt werden, so dass das Kopplungsmittel 6 spielfrei auf der Außenfläche der Mutter 4 aufsitzt.

Wie aus Figur 1 ersichtlich, ist die Ausdehnung des Kopplungsmittels 6 in Richtung der Längsachse der Mutter 4 erheblich kleiner als die Länge der Mutter 4.

Zur Fixierung des Kopplungsmittels 6 an der Mutter 4 und der Mutter 4 an der Schubstange 5 ist als einziges Fixiermittel eine Passfeder 8 erforderlich. In der Schubstange 5, in der Mutter 4 und im Kopplungsmittel 6 sind jeweils eine Bohrung vorgesehen, in welche die Passfeder 8 eingesetzt wird, wodurch eine relative Fixierung dieser Teile bewerkstelligt ist.

Eine axiale Sicherung der Mutter 4 wird mit einer Klemmnabe 9 bewerkstelligt.

Im Betrieb des Linearantriebs 1 wird die Gewindespindel 2 mittels des elektrischen Antriebs angetrieben, wobei die Drehrichtung der Gewindespindel 2 durch die Drehrichtung des elektrischen Antriebs vorgegeben ist. Durch den Kugelgewindetrieb und die Verdrehsicherung mit dem Kopplungsmittel 6 wird die Drehbewegung des elektrischen Antriebs in eine Linearbewegung der Schubstange 5 im Führungsrohr 7 umgesetzt, wobei je nach Drehrichtung die Schubstange 5 aus dem Führungsrohr 7 heraus bewegt oder in dieses eingefahren wird.

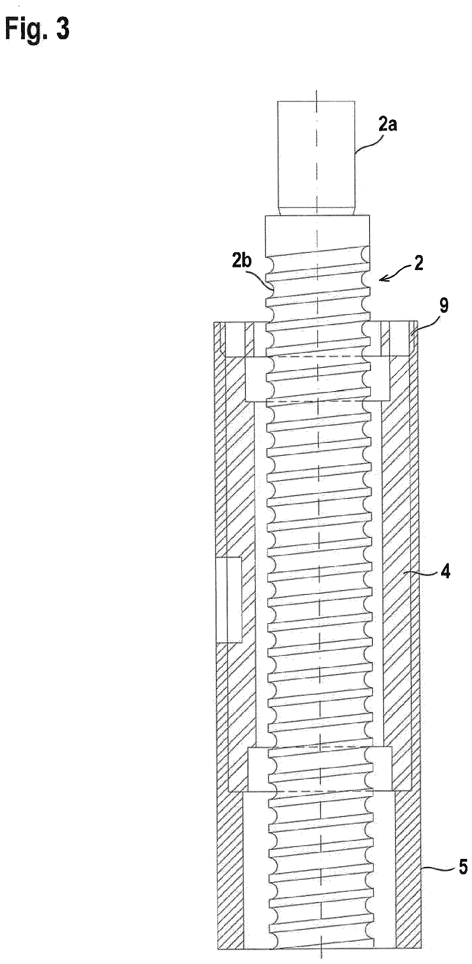

Die Figuren 3 - 6 zeigen einzelne Montageschritte bei dem Zusammenbau des Linearantriebs 1.

Figur 3 zeigt den in die Schubstange 5 eingesetzten Kugelgewindetrieb mit der Mutter 4, die mit der Klemmnabe 9 in axialer Richtung gesichert ist.

Die Bohrungen der Schubstange 5 und der Mutter 4 liegen dabei fluchtend übereinander.

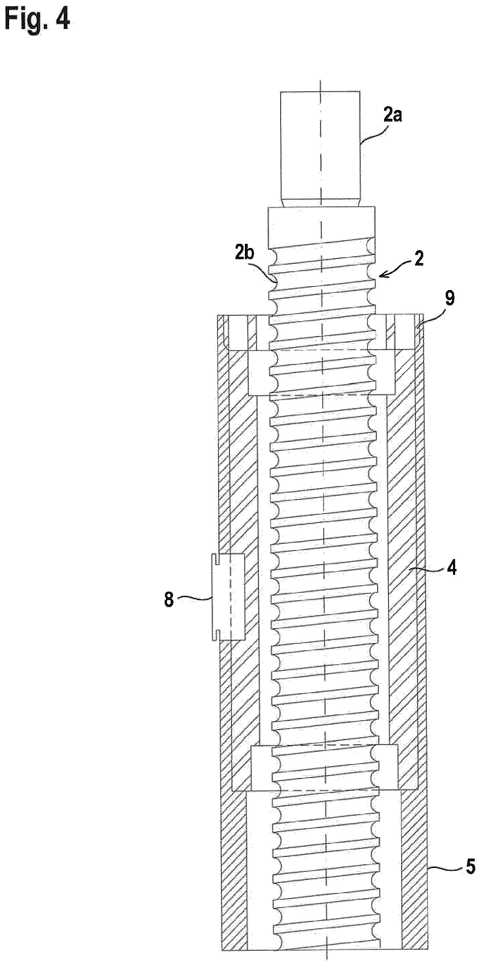

Wie der anschließende, in Figur 4 dargestellte Montageschritt zeigt, wird danach die Passfeder 8 in die Bohrungen der Schubstange 5 und der Mutter 4 eingesetzt, wodurch diese Teile gegen eine Rotation gegeneinander gesichert sind.

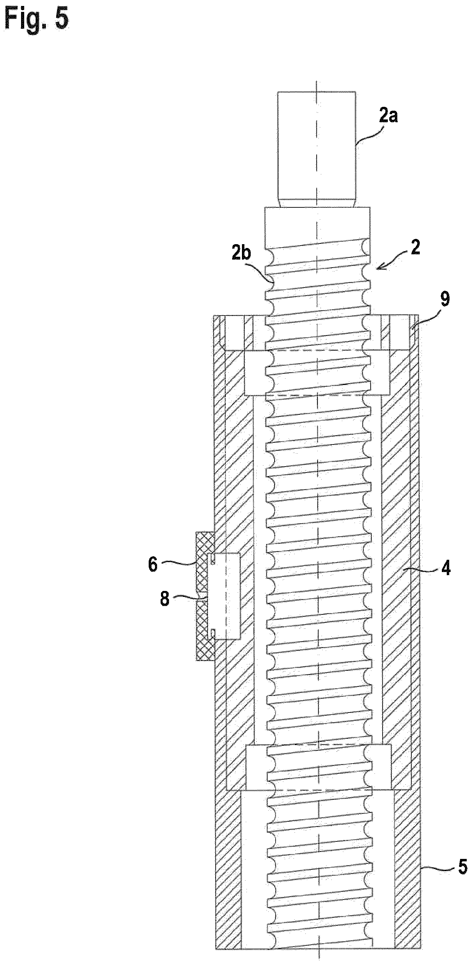

In einem anschließenden, in Figur 5 dargestellten Montageschritt wir das Kopplungsmittel 6 mit der Schubstange 5 und der Mutter 4 verbunden. Dabei wird das Kopplungsmittel 6 auf die Außenfläche der Mutter 4 aufgesetzt, insbesondere aufgerastet. Das Kopplungsmittel 6 wird dabei so zentriert, dass die Passfeder 8, die bereits die Schubstange 5 mit der Mutter 4 verbindet auch in eine Bohrung des Kopplungsmittels 6 greift, so dass das Kopplungsmittel 6 in seiner Sollposition auf der Mutter 4 lagefixiert ist. Damit sind die Schubstange 5, die Mutter 4 und das Kopplungsmittel 6 allein durch die Passfeder 8 relativ zueinander lagefixiert.

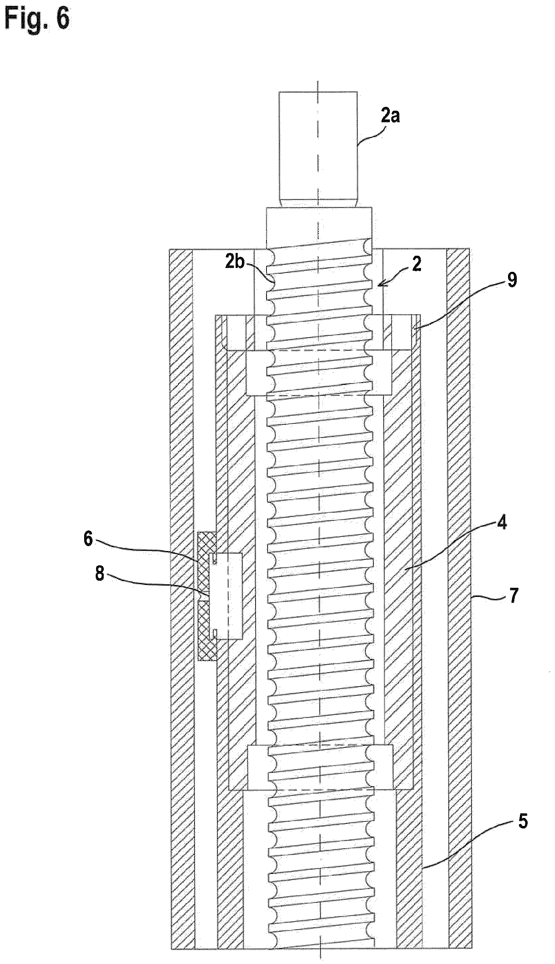

Figur 6 zeigt den abschließenden Montageschritt, in dem die gesamte in Figur 5 dargestellte Baugruppe in das Führungsrohr 7 eingeschoben wird. Durch das Kopplungsmittel 6 ist die Schubstange 5 in dem Führungsrohr 7 verdrehsicher gelagert. Die Außenfläche des Kopplungsmittels 6 bildet eine Gleitführung derart, dass bei aktiviertem elektrischen Antrieb die Schubstange 5 entlang des Führungsrohrs 7 gleiten kann.

### Bezugszeichenliste

- (1): Linearantrieb
- (2): Gewindespindel
- (2a): Anschlussflansch
- (2b): Rillen
- (3): Gehäuse
- (4): Mutter
- (5): Schubstange
- (6): Kopplungsmittel
- (7): Führungsrohr
- (7a): Innenwand
- (8): Passfeder
- (9): Klemmnabe

## Patentansprüche

1. Linearantrieb (1) mit einem elektrischen Antrieb und einem Gewindetrieb wobei eine Drehbewegung des elektrischen Antriebs in eine Linearbewegung einer Schubstange (5) umgesetzt ist, wobei der Gewindetrieb eine Mutter (4) aufweist, welche über ein Kopplungsmittel (6) mit der Schubstange (5) verbunden ist, und dass mittels des Kopplungsmittels (6) die Schubstange (5) in einem Führungsrohr (7) verdrehsicher gelagert ist, **dadurch gekennzeichnet, dass** die Innenwand (7a) des Führungsrohrs (7) einen polygonalen Querschnitt aufweist, und dass das Kopplungsmittel (6) eine an diese angepasste Außenfläche aufweist.

2. Linearantrieb (1) nach Anspruch 1, **dadurch gekennzeichnet, dass** die Außenseite des Kopplungsmittels (6) eine Gleitfläche ausbildet, welche bei einer Axialverschiebung der Mutter (4) und der Schubstange (5) entlang der Innenseite des Führungsrohrs (7) gleitet.

3. Linearantrieb (1) nach Anspruch 2, **dadurch gekennzeichnet, dass** das Kopplungsmittel (6) aus einem abriebfesten Material besteht.

4. Linearantrieb (1) nach einem der Ansprüche 1 bis 3, **dadurch gekennzeichnet, dass** die Innenwand (7a) des Führungsrohrs (7) einen Sechskant-Querschnitt aufweist.

5. Linearantrieb (1) nach einem der Ansprüche 1 bis 4, **dadurch gekennzeichnet, dass** sich das Kopplungsmittel (6) nur über einen Teilwinkelbereich des Umfangs der Mutter (4) erstreckt.

6. Linearantrieb (1) nach Anspruch 5, **dadurch gekennzeichnet, dass** die Mutter (4) eine kreiszylindrische Außenfläche aufweist.

7. Linearantrieb (1) nach einem der Ansprüche 5 oder 6, **dadurch gekennzeichnet, dass** sich das Kopplungsmittel (6) über einen Teilwinkelbereich in der Größenanordnung von 180° des Umfangs der Mutter (4) erstreckt.

8. Linearantrieb (1) nach einem der Ansprüche 1 bis 7, **dadurch gekennzeichnet, dass** das Kopplungsmittel (6) auf die Mutter (4) aufsteckbar ist.

9. Linearantrieb (1) nach einem der Ansprüche 1 bis 8, **dadurch gekennzeichnet, dass** das Kopplungsmittel (6), die Mutter (4) und die Schubstange (5) durch ein Fixiermittel verbunden sind.

10. Linearantrieb (1) nach Anspruch 9, **dadurch gekennzeichnet, dass** das Fixiermittel von einer Passfeder (8) gebildet ist.

11. Linearantrieb (1) nach Anspruch 10, **dadurch gekennzeichnet, dass** das Kopplungsmittel (6), die Mutter (4) und die Schubstange (5) jeweils eine Bohrung aufweisen, wobei zur Fixierung dieser Teile die Passfeder (8) in diese Bohrungen einführbar ist.

12. Linearantrieb (1) nach einem der Ansprüche 1 bis 11, **dadurch gekennzeichnet, dass** der elektrische Antrieb eine Gewindespindel (2) antreibt und in eine Drehbewegung versetzt, die mittels des Gewindetriebs in eine Linearbewegung der Schubstange (5) umgesetzt ist.

13. Linearantrieb (1) nach Anspruch 12, **dadurch gekennzeichnet, dass** durch die mit dem Kopplungsmittel (6) bewirkte Verdrehsicherung die Schubstange (5) eine reine Linearbewegung ausführt.

14. Linearantrieb (1) nach einem der Ansprüche 1 bis 13, **dadurch gekennzeichnet, dass** der Gewindetrieb als Kugelgewindetrieb ausgebildet ist.

## Claims

1. A linear drive (1) having an electric drive and a threaded drive, a rotary movement of the electric drive being converted into a linear movement of a push rod (5), the threaded drive having a nut (4) which is connected to the push rod (5) via a coupling means (6), and in that, by means of the coupling means (6), the push rod (5) is mounted in a guide tube (7) in a manner secured against rotation, **characterised in that** the inner wall (7a) of the guide tube (7) has a polygonal cross section, and **in that** the coupling means (6) has an outer surface adapted to the latter.

2. A linear drive (1) according to claim 1, **characterised in that** the outer surface of the coupling means (6) forms a sliding surface which slides along the inner surface of the guide tube (7) during an axial displacement of the nut (4) and the push rod (5).

3. A linear drive (1) according to claim 2, **characterised in that** the coupling means (6) consists of an abrasion-resistant material.

4. A linear drive (1) according to one of the claims 1 to 3, **characterised in that** the inner wall (7a) of the guide tube (7) has a hexagonal transverse section.

5. A linear drive (1) according to one of the claims 1 to 4, **characterised in that** the coupling means (6) extends only over a partial angular region of the circumference of the nut (4).

6. A linear drive (1) according to claim 5, **characterised in that** the nut (4) has a circular cylindrical outer surface.

7. A linear drive (1) according to one of the claims 5 or 6, **characterised in that** the coupling means (6) extends over a partial angular range in the size arrangement of 180° of the circumference of the nut (4).

8. A linear drive (1) according to one of the claims 1 to 7, **characterised in that** the coupling means (6) can be plugged onto the nut (4).

9. A linear drive (1) according to one of the claims 1 to 8, **characterised in that** the coupling means (6), the nut (4) and the push rod (5) are connected by a fixing means.

10. A linear drive (1) according to claim 9, **characterised in that** the fixing means is formed by a key (8).

11. A linear drive (1) according to claim 10, **characterised in that** the coupling means (6), the nut (4) and the push rod (5) each have a bore, the feather key (8) being insertable into these bores for fixing these parts.

12. A linear drive (1) according to one of the claims 1 to 11, **characterised in that** the electric drive drives a threaded spindle (2) and sets it into a rotary movement, which is converted into a linear movement of the push rod (5) by means of the threaded drive.

13. A linear drive (1) according to claim 12, **characterised in that** the push rod (5) executes a purely linear movement by means of the anti-rotation device effected by the coupling means (6).

14. A linear drive (1) according to one of the claims 1 to 13, **characterised in that** the screw drive is designed as a ball screw drive.

## Revendications

1. Entraînement linéaire (1) avec un entraînement électrique et un entraînement fileté, un mouvement de rotation de l'entraînement électrique étant converti en un mouvement linéaire d'une tige de poussée (5), l'entraînement fileté présentant un écrou (4) qui est relié à la tige de poussée (5) par un moyen d'accouplement (6), et en ce que, la tige de poussée (5) est montée de manière fixe en rotation dans un tube de guidage (7) au moyen du moyen d'accouplement (6), **caractérisé en ce que** la paroi intérieure (7a) du tube de guidage (7) présente une section transversale polygonale et **en ce que** le moyen d'accouplement (6) présente une surface extérieure conçue pour celle-ci.

2. Entraînement linéaire (1) selon la revendication 1, **caractérisé en ce que** la surface extérieure du moyen de couplage (6) forme une surface de glissement qui glisse le long de la surface intérieure du tube de guidage (7) pendant un déplacement axial de l'écrou (4) et de la tige de poussée (5).

3. Entraînement linéaire (1) selon la revendication 2, **caractérisé en ce que** le moyen d'accouplement (6) est constitué d'un matériau résistant à l'abrasion.

4. Entraînement linéaire (1) selon l'une des revendications 1 à 3, **caractérisé en ce que** la paroi interne (7a) du tube de guidage (7) présente une section transversale hexagonale.

5. Entraînement linéaire (1) selon l'une des revendications 1 à 4, **caractérisé en ce que** le moyen d'accouplement (6) ne s'étend que sur une région angulaire partielle de la circonférence de l'écrou (4).

6. Entraînement linéaire (1) selon la revendication 5, **caractérisé en ce que** l'écrou (4) présente une surface extérieure cylindrique circulaire.

7. Entraînement linéaire (1) selon l'une des revendications 5 ou 6, **caractérisé en ce que** le moyen d'accouplement (6) s'étend sur une zone angulaire partielle dans l'agencement des dimensions de 180° de la circonférence de l'écrou (4).

8. Entraînement linéaire (1) selon l'une des revendications 1 à 7, **caractérisé en ce que** le moyen d'accouplement (6) est emboîtable sur l'écrou (4).

9. Entraînement linéaire (1) selon l'une des revendications 1 à 8, **caractérisé en ce que** le moyen de couplage (6), l'écrou (4) et la tige de poussée (5) sont reliés par un moyen de fixation.

10. Entraînement linéaire (1) selon la revendication 9, **caractérisé en ce que** le moyen de fixation est formé par une clavette (8).

11. Entraînement linéaire (1) selon la revendication 10, **caractérisé en ce que** le moyen de couplage (6), l'écrou (4) et la tige de poussée (5) présentent chacun un alésage, la clavette (8) pouvant être insérée dans ces alésages pour fixer ces pièces.

12. Entraînement linéaire (1) selon l'une des revendications 1 à 11, **caractérisé en ce que** l'entraînement électrique entraîne une broche filetée (2) et lui imprime un mouvement de rotation, qui est converti en un mouvement linéaire de la tige de poussée (5) au moyen de l'entraînement fileté.

13. Entraînement linéaire (1) selon la revendication 12, **caractérisé en ce que** la tige de poussée (5) exécute un mouvement purement linéaire au moyen du dispositif anti-rotation effectué par le moyen d'accouplement (6).

14. Entraînement linéaire (1) selon l'une des revendications 1 à 13, **caractérisé en ce que** l'entraînement par vis est conçu comme un entraînement par vis à billes.
